# EUROPÄISCHE PATENTSCHRIFT

(11) **EP 0 722 208 B1**
(45) Veröffentlichungstag und Bekanntmachung des Hinweises auf die Patenterteilung: **10.10.2001**
(21) Anmeldenummer: 95120202.7
(22) Anmeldetag: 20.12.1995
(51) Int. Cl.: H02G 3/18

(54) **Anordnung zur Einbauhalterung von Elektro-Installationsgeräten**
Device for flushmounting an electrical installation apparatus
Dispositif de montage à affleurement d'un appareil d'installation électrique

(30) Priorität: 10.01.1995 DE 29500324 U; 29.11.1995 DE 29518926 U
(43) Veröffentlichungstag der Anmeldung: 17.07.1996
(73) Patentinhaber: GIRA GIERSIEPEN GmbH. & CO. KG., D-42477 Radevormwald (DE)
(72) Erfinder: Borowski, Gudrun, D-58256 Ennepetal (DE); Panknin, Jürgen, D-42477 Radevormwald (DE)
(74) Vertreter: Patentanwälte Dr. Solf & Zapf

(56) Entgegenhaltungen:
- DE-A- 4 222 656
- DE-A- 4 225 324
- DE-C- 681 532
- DE-U- 9 106 123
- GB-A- 2 264 595

## Beschreibung

Die vorliegende Erfindung betrifft eine Anordnung zur Einbauhalterung von Elektro-Installationsgeräten, bestehend aus einer Geräteaufnahmedose und einem mit mindestens einem Installationsgerät zu verbindenden und an der Geräteaufnahmedose befestigbaren Tragelement, welches im wesentlichen flach und rahmenartig als sogenannter Tragring in Einfach- oder Mehrfachausführung ausgebildet ist, wobei das Tragelement über Rastmittel an der Geräteaufnahmedose befestigbar ist.

Es ist bekannt, zur Einbauhalterung von elektrischen Installationsgeräten, wie Schuko-Steckdoseneinsätzen, Schaltereinsätzen und dergleichen, an diesen jeweils ein als sogenannter Tragring ausgebildetes Tragelement zu befestigen und dann nach dem Einsetzen in die Geräteaufnahmedose den Tragring an der Dose zu befestigen, so daß dann das Installationsgerät mittelbar über den Tragring an bzw. in der Dose befestigt ist (siehe beispielsweise DE-U-86 34 217). Solche Tragringe bestehen in aller Regel aus Metallblech, und zur Befestigung an der Dose liegen sie im oberen Randbereich von Dosenwandungen auf, wobei die Befestigung durch Schrauben, die durch Langlöcher des Tragringes in Bohrungen der Dose eingreifen, und/oder durch sogenannte Spreizkrallen erfolgt, die über Schrauben gegen die Innenwandungen der Dose angedrückt bzw. angezogen werden. Mit solchen bekannten Halterungsanordnungen ist aber die Montage recht umständlich und zeitaufwendig.

Das DE-GM 91 06 123 beschreibt eine nicht gattungsgemäße Vorrichtung zur lösbaren Befestigung eines Einbaugerätes in einer Isolierdose, wobei das Einbaugerät einstückig angeformte federelastische Rastzungen aufweist, die mit Rastnasen in Öffnungen der Dose einschnappen. Somit ist kein gesondertes Tragelement vorgesehen. Die Rastzungen besitzen an ihren freien, entgegen der Einsetzrichtung nach oben weisenden Enden Lösestege. Aufgrund der einstückigen Ausbildung des jeweiligen Einbaugerätes mit den Rastzungen muß jedes Einbaugerät, z.B. als Steckdose oder Schalter, individuell mit den rastmitteln gefertigt werden, was relativ aufwendig ist. Die Rastzungen werden in montierten Zustand arretiert, indem die Lösestege in führungskanäle eines zusätzlichen Abdeckrahmens eingreifen. Somit ist ohne den Abdeckrahmen keine hinreichende Arretierung der Rastverbindungen gewährleistet, denn einerseits sind die Rastzungen ja federelastisch, und andererseits sind auch die Dosenwandungen im Bereich der Öffnungen der Dose grundsätzlich elastisch verformbar.

Die DE-C- 681 532 offenbart eine Befestigungsvorrichtung für einen Tragrahmen von Installationsapparaten an Unterputzdosen, bei der innerhalb der Dose federnde Rastarme (Klinken) befestigt sind, während der Tragring bzw. Tragrahmen einstückig angeformte, in die Dose ragende Lappen mit Rastöffnungen aufweist. Vor allem die in der Dose zu befestigenden Rastarme führen zu einer recht aufwendigen Montage. Zudem wird aufgrund dieser Anordnung innerhalb der Dose ein nicht unerheblicher Platz für die Rastverbindung benötigt, der zur Unterbringung des jeweiligen Gerätes verloren geht. Hinzu kommt, daß die funktionswesentlichen Bestandteile der Rastverbindug offensichtlich aus Metall bestehen und deren Herstellung aufwendig und kostenintensiv ist.

Die DE-A- 42 22 656 beschreibt eine elektrische Steckdose zur versenkten Anordnung an einer Montagefläche, z.B. in einer UP-Wandeinbaudose. Die Steckdose besitzt einen Tragring mit daran gehaltenem Sockel, wobei der Tragring vier gleichförmig angeordnete Schlüsselloch-Öffnungen zur Aufnahme von Befestigungsmitteln aufweist und drehbar angeordnet ist. Der Tragring ist über Schrauben fixierbar, was zu eine aufwendigen und zeitintensiven Montage des Tragringes führt.

Der vorliegenden Erfindung liegt die Aufgabe zugrunde, eine gattungsgemäße Halterungsanordnung zu schaffen, mit der eine besonders schnelle und einfache Einbaumontage von elektrischen Installationsgeräten möglich ist, und die zudem besonders wirtschaftlich in der Herstellung ist.

Erfindungsgemäß wird dies in einer ersten Ausführungsform dadurch erreicht, daß das Tragelement als Formteil aus Kunststoff ausgebildet ist und daß die Rastarme Bestandteil des Tragelementes sind, während die Rastöffnungen im an eine Einsatzöffnung angrenzenden oberen Randbereich von Wandungen der Geräteaufnahmedose gebildet sind.

In einer zweiten erfindungsgemäßen Ausführungsform wird die Aufgabe dadurch gelöst, daß das Tragelement als Formteil aus Kunststoff ausgebildet ist und das die Rastmittel aus im wesentlichen formstabilen Rastansätzen des Tragelementes und entsprechend zugeordneten, im Bereich von elastisch verformbaren Wandungen der Geräteaufnahmedose gebildeten Rastöffnungen bestehen.

Indem erfindungsgemäß das Tragelement als Formteil aus Kunststoff ausgebildet ist, wobei die tragelementseitigen Rastmittel vorzugsweise einstückig angeformt sind, ist auch die Herstellung besonders wirtschaftlich. Zudem können hierbei durch geeignete Wahl des Kunststoffmaterials die Halterungseigenschaften der Rastmittel optimal gestaltet werden.

In einer besonders vorteilhaften Weiterbildung der Erfindung wird erreicht, daß insbesondere die mit elastisch verformbaren Wandungen der Geräteaufnahmedose zusammenwirkenden Rastverbindungen sicher gegen ungewolltes Lösen fixiert sind. Hierzu ist vorgesehen, daß zumindest bei einer Teilmenge der vorhandenen Rastverbindungen jeweils der im wesentlichen senkrecht zur Seitenwandung in die Rastöffnung eingreifende Rastansatz einen die Seitenwandung in Richtung der gegenüberliegenden Wandungsseite rastend durch- und hintergreifenden Haltefortsatz aufweist.

Durch diese vorteilhafte Ausgestaltung wird erreicht, daß im Bereich jeder mit einem solchen Haltefortsatz ausgestatteten Rastverbindung nach dem Verrasten die jeweilige Seitenwandung von dem Haltefortsatz so "festgehalten" wird, daß eine ungewollte elastische Verformung der Wandung nach außen vermieden wird. Eine solche "Löseverformung" ist allenfalls mit einer relativ hohen Lösekraft und mittels eines geeigneten Werkzeuges unter Überwindung der hintergreifenden Verrastung des Haltefortsatzes möglich, so daß die Verbindung grundsätzlich lösbar ist, aber vorteilhafterweise nur dann, wenn ein Lösen auch wirklich gewollt ist. Durch diese Maßnahme wird die gewünschte Arretierung der Rastverbindungen vorteilhafterweise ohne zusätzliche Sicherungselemente allein durch die Ausgestaltung der Rastansätze mit den Haltefortsätzen erreicht ("Selbstarretierung").

Die Erfindung eignet sich vor allem zur Anwendung bei sogenannten Kanal-Einbaudosen, wobei eine oder mehrere Geräteaufnahnmedose über gesonderte Halterungsmittel in einem Kabelkanal (z.B. Brüstungskanal) befestigt werden. Durch die vorliegende Erfindung braucht dann lediglich noch das mit dem jeweiligen Installationsgerät verbundene Tragelement mit der Dose verrastet zu werden. Dabei kann bereits zuvor eine Vorverdrahtung erfolgen, indem die Anschlußdrähte durch Schlitzöffnungen in den Wandungen der Dose geführt werden.

Weitere vorteilhafte Ausgestaltungsmerkmale der Erfindung sind in den Unteransprüchen sowie der folgenden Beschreibung enthalten.

Anhand von in der Zeichnung dargestellten, bevorzugten Ausführungsbeispielen soll die Erfindung nun näher erläutert werden. Dabei zeigen:
- Fig. 1: eine Perspektivansicht der wesentlichen Bestandteile einer erfindungsgemäßen Halterungsanordnung, d.h. einer Geräteaufnahmedose und eines Tragelementes, im Zustand vor Montage bzw. nach Demontage (Explosionsdarstellung),
- Fig. 2: eine Ansicht der Bestandteile gemäß Fig. 1, jedoch im zusammengesetzten, erfindungsgmäß verrasteten Zustand,
- Fig. 3: eine Perspektivansicht einer alternativen Ausführungsform eines erfindungsgemäßen Tragelementes,
- Fig. 4: eine Seitenansicht des Tragelementes in Pfeilrichtung IV gemäß Fig. 3,
- Fig. 5: eine Seitenansicht der Tragelementes in Pfeilrichtung V gemäß Fig. 3 bzw. Fig. 4,
- Fig. 6: eine Draufsicht des Tragelementes in Pfeilrichtung VI gemäß Fig. 4,
- Fig. 7: eine Perspektivansicht analog zu Fig. 1 in einer vorteilhaften Weiterbildung der erfindungsgemäßen Halterungsanordnung,
- Fig. 8: eine Ansicht analog zu Fig. 2 der Bestandteile gemäß Fig. 7, jedoch mit zusätzlicher Ausschnittvergrößerung in Frontansicht im Bereich der erfindungsgemäßen Rastmittel, und
- Fig. 9: eine vergrößerte Perspektivansicht des erfindungsgemäßen Tragelementes in der Ausführung nach Fig. 7 und 8.

In den verschiedenen Figuren der Zeichnung sind gleiche Teile stets mit den gleichen Bezugszeichen versehen, so daß jede eventuell nur einmal unter Bezugnahme auf eine der Zeichnungsfiguren vorkommende Beschreibung eines Teils analog auch bezüglich der anderen Zeichnungsfiguren gilt, in denen dieses Teil mit mit entsprechenden Bezugszeichen ebenfalls zu erkennen ist.

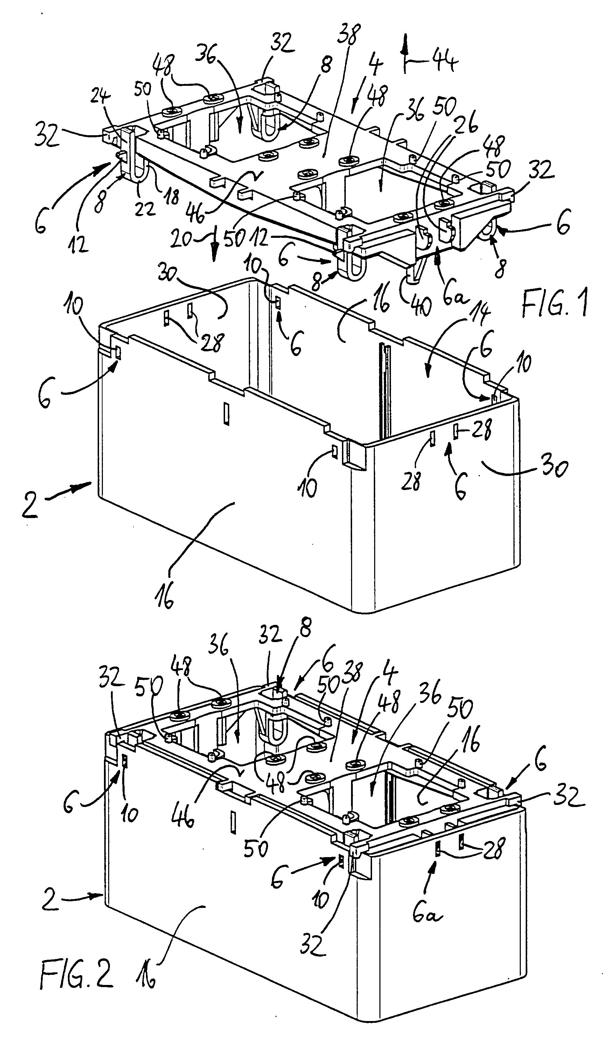

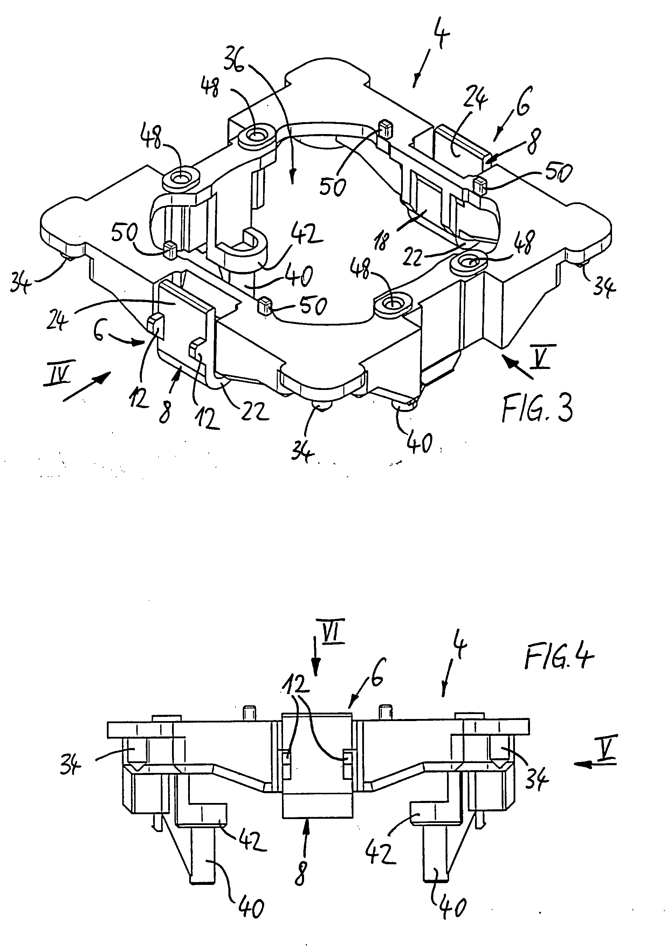

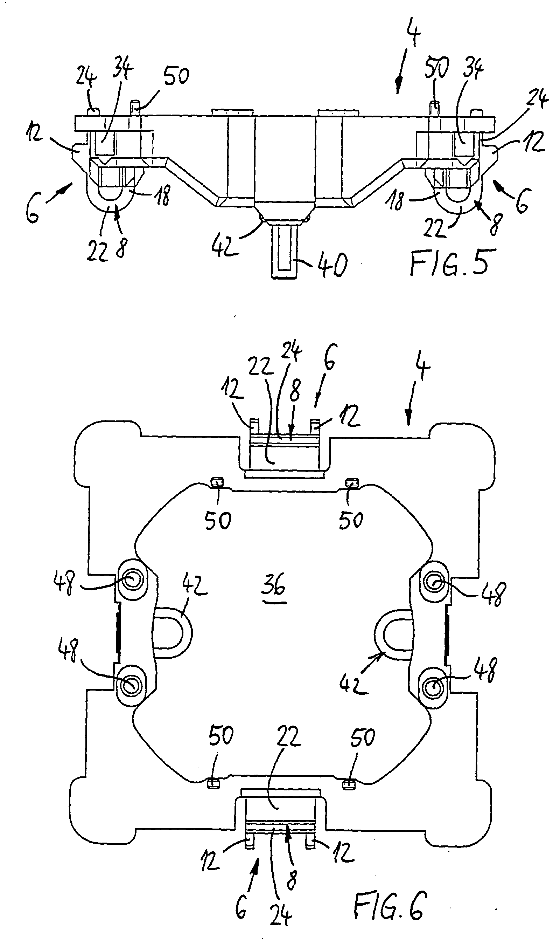

Wie sich zunächst aus Fig. 1 und 2 ergibt, besteht eine erfindungsgemäße Anordnung zur Einbauhalterung von selbst nicht dargestellten Elektro-Installationsgeräten im wesentlichen aus einer Geräteaufnahmedose 2 und einem Tragelement 4. Die Geräteaufnahmedose 2, im folgenden der Einfachheit halber lediglich "Dose" genannt, dient zur Aufnahme von mindestens einem nicht dargestellten Installationsgerät, im Falle der in Fig. 1 und 2 veranschaulichten Ausführungsform speziell zur Aufnahme von zwei Geräten (Zweierkombination). Entsprechend ist an dem Tragelement 4 mindestens ein nicht dargestelltes Installationsgerät befestigbar; gemäß Fig. 1 und 2 sowie 7 bis 9 dient das dargestellte Tragelement 4 zum Befestigen von zwei Geräten, während in den Fig. 3 bis 6 eine Einfach-Ausführung für ein Installationsgerät veranschaulicht ist. In beiden Fällen werden die Installationsgeräte mittelbar über das Tragelement an bzw. in der Dose 2 befestigt.

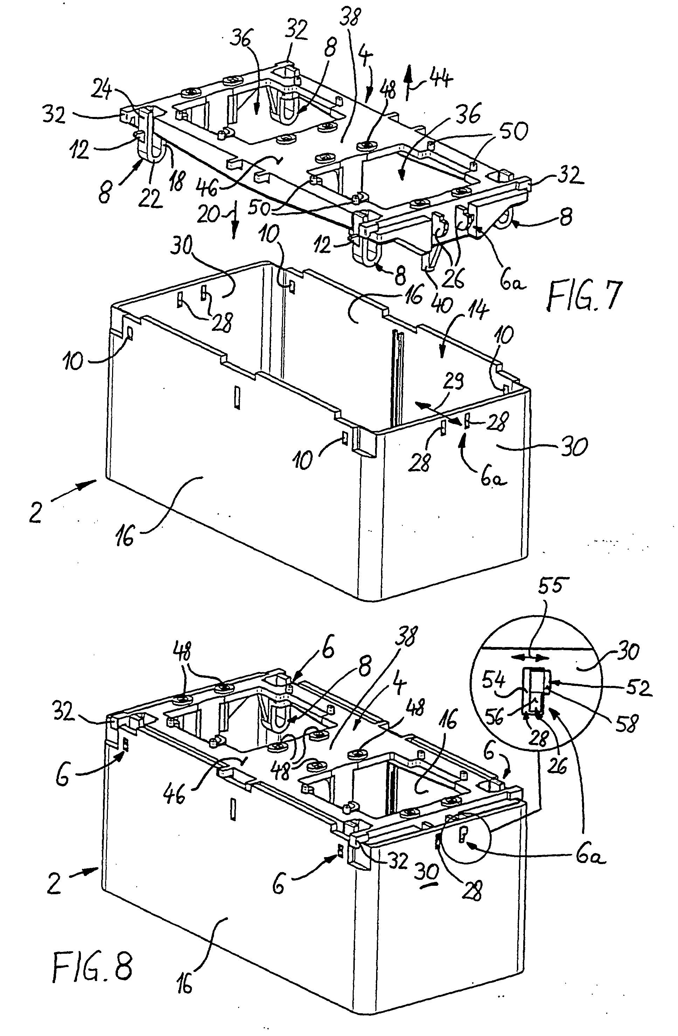

Hierzu ist nun erfindungsgemäß vorgesehen, daß das Tragelement 4 über Rastmittel 6, 6a an der Dose 2 befestigbar ist. Im Falle der Ausführungen nach Fig.1 und 2 sowie Fig. 7 bis 9 sind als Rastmittel 6 zunächst zwei mal zwei paarweise gegenüberliegende, federelastische Rastarme 8 und entsprechend zugeordnete Rastöffnungen 10 vorgesehen, wobei jeder Rastarm 8 mit einem Rastnocken 12 in eine zugehörige Rastöffnung 10 eingreift. Besonders vorteilhaft ist es hierbei, wenn die Rastarme 8 Bestandteil des Tragelementes 4 sind, während die Rastöffnungen 10 im an eine obere Einsatzöffnung 14 der Dose 2 (Fig. 1 bzw. 7) angrenzenden, oberen Randbereich von Seitenwandungen 16 der Dose 2 gebildet sind. Hierdurch ist es auf besonders einfache Weise möglich, eine Lösbarkeit der Rastverbindung zu gewährleisten. Hierzu ist es zudem vorteilhaft, wenn jeder Rastarm 8 einen etwa U-förmigen Verlauf aufweist und sich ausgehend von dem Tragelement 4 zunächst mit einem ersten Abschnitt 18 in Einsetzrichtung (Pfeil 20 in Fig. 1) nach unten erstreckt und über einen nach außen gerichteten 180°-Bogen 22 in einen entgegengesetzt nach oben gerichteten, den Rastnocken 12 aufweisenden zweiten Abschnitt 24 übergeht. Hierdurch kann der nach oben weisende zweite Abschnitt in seinem freien Endbereich als "Lösehebel" zum Lösen der Rastverbindung manuell oder mit einem geeigneten Werkzeug betätigt werden. Dies dürfte anhand der zeichnerischen Darstellungen ohne weitere Erläuterungen nachvollziehbar sein.

Alternativ zu der gerade beschriebenen Ausgestaltung der Rastmittel 6, vorzugsweise aber - wie dargestellt - zusätzlich hierzu, können auch Rastmittel 6a vorgesehen sein, die aus im wesentlichen formstabilen Rastansätzen 26 des Tragelementes 4 und entsprechend zugeordneten Rastöffnungen 28 der Dose 2 bestehen, wobei dann die Rastöffnungen 28 im Bereich von (in Doppelpfeilrichtung 29 gemäß Fig. 7) elastisch verformbaren Seitenwandungen 30 bzw. Wandungsabschnitten der Dose 2 gebildet sind. Alternativ zu dieser dargestellten Ausführung ist grundsätzlich aber auch eine "umgekehrte" Ausführung möglich, wobei im Bereich der Wandungen der Dose 2 Ansätze und im Bereich des Tragelementes 4 entsprechende Öffnungen vorgesehen sind. Diese dargestellte und beschriebene Ausführung mit den zusätzlichen Rastansätzen 26 und Rastöffnungen 28 eignet sich vor allem für Mehrfachkombinationen wie in Fig. 1 und 2 sowie 7 bis 9 dargestellt. Hierbei sind bevorzugt die federelastischen Rastarme 8 im Bereich der Längsseiten des im wesentlichen rechteckigen Tragelementes 4 angeordnet, während die zusätzlichen Rastansätze 26 im Bereich der Schmalseiten vorgesehen sind.

Es ist vorteilhaft, wenn das Tragelement 4 randliche Halterungsabschnitte 32 aufweist, die im mit der Dose 2 verbundenen und verrasteten Zustand den oberen Rand der jeweiligen Wandungen 16, 30 der Dose 2 übergreifen, und zwar insbesondere derart im den Rastmitteln 6 und/oder 6a jeweils benachbarten Bereich der jeweiligen Wandungen 16 bzw. 30, daß ein ungewolltes Lösen der Verrastung durch elastisches Aufweiten der Wandungen 16 bzw. 30 sicher vermieden wird. Dies ist anhand der Fig. 1 und 2 leicht nachzuvollziehen.

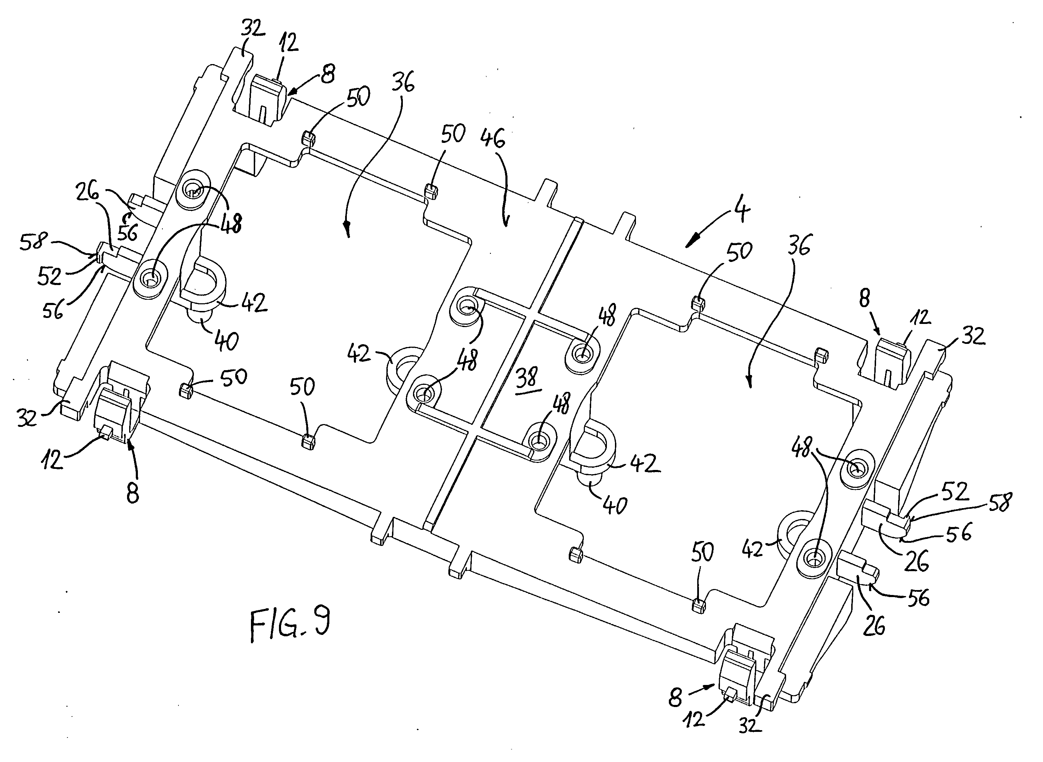

Wie sich ebenfalls aus Fig. 2 und 8 ergibt, greift das Tragelement 4 zweckmäßigerweise in seinem mit der Dose 2 in deren oberen Randbereich verbundenen und verrasteten Zustand bereichsweise im wesentlichen spielfrei in die Dose 2 ein und liegt dabei bereichsweise auf dem oberen Rand der Wandungen 16, 30 der Dose 2 auf, und zwar insbesondere in deren Eckbereichen. Hierdurch wird eine gute Abstützung in Einsetzrichtung (Pfeil 20 in Fig. 1) erreicht. In der Ausführungsform nach Fig. 3 bis 6 sind hierbei vorteilhafterweise in den Auflagebereichen Positionierstifte 34 angeordnet, die in entsprechende Öffnungen der Dose (nicht dargestellt) eingreifen.

Das Tragelement 4 ist in den dargestellten, erfindungsgemäßen Ausführungsformen im wesentlichen flach und rahmenrartig als sogenannter "Tragring" ausgebildet. Hierbei ist eine Mehrfachausführung möglich, wie beispielsweise in Fig. 1 und 2 sowie 7 bis 9 eine Ausführung für Zweierkombinationen, wobei das Tragelement 4 bzw. der "Tragring" länglich rechteckig mit zwei Einsatzöffnungen 36 für Installationsgeräte ausgebildet ist, so daß ein mittiger Trennsteg 38 gebildet ist. Im Falle der Ausführung nach Fig. 3 bis 6 handelt es sich bei dem Tragelement 4 um einen Einfach-Tragring, der bevorzugt eine etwa quadratische Kontur besitzt.

Es ist besonders zweckmäßig, das Tragelement 4 als Formteil aus Kunststoff auszubilden, wobei die tragelementseitigen Rastmittel 6, 6a sowie vorzugsweise auch alle weiteren beschriebenen Bestandteile insbesondere einstückig angeformt sind. Zweckmäßigerweise wird als Kunststoffmaterial ein Thermoplast, insbesondere Polyamid (PA 6), verwendet.

Bei der Einfach-Ausführung des Tragelementes 4 nach Fig. 3 bis 6 besitzt dieses bevorzugt zwei gegenüberliegende Rastarme 8, die im dargestellten Ausführungsbeispiel jeweils zwei Rastnocken 12 aufweisen. Dementsprechend besitzt die nicht dargestellte, zugehörige Dose 2 für jeden Rastarm 8 zwei Rastöffnungen 10.

Das Tragelement 4 kann insbesondere unlösbar mit einem Installationsgerät bzw. einem Geräteeinsatz, wie beispielsweise einem Schuko-Steckdoseneinsatz, einem Schaltereinsatz oder dergleichen, verbunden sein. Hierzu ist es besonders zweckmäßig, wenn das aus thermoplastischem Kunststoff bestehende Tragelement 4 mindestens zwei stiftartige Verbindungsansätze 40 aufweist, die durch Öffnungen des nicht dargestellten Installationsgerätes geführt werden, und deren Enden dann zur Erzeugung von Formschlußverbindungen nietkopfartig erweitert werden. Dies erfolgt vorzugsweise durch Erwärmen und Stauchen des Materials der Verbindungsansätze 40, und zwar insbesondere im Ultraschallverfahren.

Nach Erzeugung dieser Verbindungen sitzt das Installationsgerät bereichsweise formschlüssig und spielfrei eingeklemmt jeweils zwischen dem dann nietkopfartig bzw. pilzförmig erweiterten Ende des jeweiligen Verbindungsansatzes 40 und einem zusätzlichen Anlageelement 42 des Tragelementes 4. Bei dieser Art der Verbindung zwischen dem Tragelement 4 und einem Installationsgerät ist von Vorteil, daß der Geräteeinsatz aus beliebigem Material bestehen kann. Üblicherweise bestehen die Einsätze aus Duroplast, so daß das thermoplastische Tragelement 4 mit dem duroplastischen Einsatz nicht verschweißt, d.h. stoffschlüssig verbunden werden könnte.

Wie sich nun noch aus der Zeichnung ergibt, kann das Tragelement 4 im Bereich seiner der Dose 2 abgekehrten, in Entnahmerichtung (Pfeil 44 in Fig. 1) weisenden Oberseite 46 Befestigungsmittel - insbesondere in Form von Löchern 48 zum Einschrauben von vorzugsweise selbstschneidenden Schrauben (nicht dargestellt) - für mindestens ein beliebiges Geräteelement aufweisen. Hierdurch kann beispielsweise eine Abdeckhaube (ebenfalls nicht dargestellt) auf einfache Weise befestigt werden, so daß die Erfindung dann speziell auch für Installationsgeräte im Bereich der Kommunikationstechnik eingesetzt werden kann.

Zudem kann das Tragelement 4 im Bereich seiner Oberseite 46 vorzugsweise einstückig angeformte Positionierelemente 50 für bestimmte Geräteteile, insbesondere für eine plattenförmige Abdeckung, aufweisen.

Durch die erfindungsgemäße Rastverbindung zwischen dem Tragelement 4 und der Geräteaufnahmedose 2 ist die Montage außerordentlich schnell und einfach durchführbar, wobei eine weitere Vereinfachung dadurch erreicht werden kann, daß bei Mehrfachkombinationen vorab eine Vorverdrahtung erfolgt, so daß das Tragelement 4 zusammen mit den daran befestigten Installationsgeräteeinsätzen nur noch in die Dose 2 eingedrückt und verrastet zu werden braucht.

In einer speziell in den Fig. 7 bis 9 veranschaulichten, vorteilhaften Ausgestaltung der Erfindung ist nun zudem zumindest bei einer Teilmenge der vorhandenen Rastverbindungen eine "Selbstarretierung" vorgesehen. Dies ist insbesondere bei den im wesentlichen formstabilen Rastansätzen 26 von Bedeutung, da diese ja mit elastisch verformbaren Bereichen der Seitenwandungen 30 zusammenwirken (vgl. den Doppelpfeil 29 in Fig. 7).

Wie sich insbesondere aus Fig. 8 und der zusätzlich eingezeichneten Ausschnittvergrößerung ergibt, weist zumindest bei einem Teil der Rastmittel 6a der Rastansatz 26 einen die Seitenwandung 30 in Richtung der gegenüberliegenden Wandungsaußenseite rastend durch- und hintergreifenden Haltefortsatz 52 auf (s.auch Fig. 9). Der Rastansatz 26 ist hierbei im wesentlichen flach und streifenförmig ausgebildet und erstreckt sich ausgehend von dem Tragelement 4 senkrecht zur Einsetzrichtung 20 weg nach außen. Dabei ist der Rastansatz 26 bezüglich seines Streifenquerschnittes hochkant in Einsetzrichtung 20 angeordnet. Auf diese Weise wird eine relativ hohe Formstabilität bzw. praktisch eine Unverformbarkeit in Einsetzrichtung 20 bzw. Entnahmerichtung 44 sowie auch in Richtung der Längserstreckung des Rastansatzes 26 erreicht. In seitlicher Richtung ist allerdings der Rastansatz 26 grundsätzlich elastisch verformbar, allerdings relativ "schwerelastisch", d.h. eine Bewegung ist nur unter Überwindung einer relativ hohen Federkraft möglich. Wie sich ferner aus der Ausschnittvergrößerung in Fig. 8 ergibt, erstreckt sich der Haltefortsatz 52 ausgehend von dem Rastansatz 26 quer zur Dosen-Einsetzrichtung 20 zur Seite. Hierbei ist auf der dem Haltefortsatz 52 abgekehrten Seite des Rastansatzes 26 zwischen diesem und dem Öffnungsrand der Rastöffnung 28 ein Spalt 54 gebildet, dessen Breite größer/gleich der entsprechenden, den Rastansatz 26 seitlich überragenden Breite des Haltefortsatzes 52 ist. Durch diese erfindungsgemäße Ausgestaltung wird erreicht, daß sich der Rastansatz 26 beim Einsetzen bedingt durch den Haltefortsatz 52 geringfügig elastisch seitlich in den Spalt 54 bewegen kann (vgl. den Doppelpfeil 55), bis er mit dem Haltefortsatz 52 die Seitenwandung 30 hintergreift.

Für das Einsetzen und Verrasten ist es vorteilhaft, wenn der Rastansatz 26 auf seiner in Dosen-Einsetzrichtung 20 (nach unten) weisenden Seite eine zum elastischen Bewegen (nach außen Wegdrängen; Doppelpfeil 29 in Fig.7) der Seitenwandung 30 ausgebildete Auflauffläche 56 aufweist. Zudem weist der Haltefortsatz 52 eine im Zusammenwirken mit dem Öffnungsrand der Rastöffnung 28 eine elastische Seitenbewegung des Rastansatzes 26 (Doppelpfeil 55) bewirkende Auflauffläche 58 auf. Hierzu wird auch auf Fig.9 verwiesen.

In einer vorteilhaften, in der Zeichnung aber nicht dargestellten Ausführungsform kann jeweils die mit dem Rastansatz 26 zusammenwirkende Rastöffnung 28 auf der Außenseite der Seitenwandung 30 eine Aufnahmevertiefung für den Haltefortsatz 52 aufweisen, so daß letzterer im montierten, verrasteten Zustand vorteilhafterweise praktisch versenkt innerhalb der Dicke der Seitenwandung 30 liegt.

Bei dem dargestellten, bevorzugten Ausführungsbeispiel weisen nur die im wesentlichen formstabilen Rastansätze 26 zum Teil bevorzugte Haltefortsätze 52 auf. Es ist allerdings zu bemerken, daß sich diese Ausgestaltung grundsätzlich auch für die Rastmittel 6 eignet, wozu dann die mit den Rastöffnungen 10 zusammenwirkenden Rastnocken 12 entsprechende Haltefortsätze aufweisen würden, wodurch dann die Rastarme 8 entsprechend hinsichtlich ihrer elastischen Beweglichkeit arretiert wären.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Anordnung zur Einbauhalterung von Elektro-Installationsgeräten, bestehend aus einer Geräteaufnahmedose (2) und einem mit mindestens einem Installationsgerät zu verbindenden und an der Geräteaufnahmedose (2) befestigbaren Tragelement (4), welches im wesentlichen flach und rahmenartig als sogenannter Tragring in Einfach- oder Mehrfachausführung ausgebildet ist, wobei das Tragelement (4) über Rastmittel (6, 6a) an der Geräteaufnahmedose (2) befestigbar ist und die'' Rastmittel (6) aus mindestens zwei gegenüberliegenden, federelastischen Rastarmen (8) und entsprechend zugeordneten Rastöffnungen (10) bestehen, wobei jeder Rastarm (8) mit mindestens einem Rastnocken (12) in eine zugehörige Rastöffnung (10) eingreift,
**dadurch gekennzeichnet,**
**daß** das Tragelement (4) als Formteil aus Kunststoff ausgebildet ist und daß die Rastarme (8) Bestandteil des Tragelementes (4) sind, während die Rastöffnungen (10) im an eine Einsatzöffnung (14) angrenzenden, oberen Randbereich von Wandungen (16) der Geräteaufnahmedose (2) gebildet sind.

2. Anordnung nach Anspruch 1,
**dadurch gekennzeichnet,**
**daß** zusätzliche Rastmittel (6a) vorgesehen sind, die aus im wesentlichen formstabilen Rastansätzen (26) des Tragelementes (4) und entsprechend zugeordneten, im Bereich von elastisch verformbaren (Pfeil 29) Wandungen (30) der Geräteaufnahmedose (2) gebildeten Rastöffnungen (28) bestehen.

3. Anordnung zur Einbauhalterung von Elektro-Installationsgeräten, bestehend aus einer Geräteaufnahmedose (2) und einem mit mindestens einem Installationsgerät zu verbindenden und an der Geräteaufnahmedose (2) befestigbaren Tragelement (4), welches im wesentlichen flach und rahmenartig als sogenannter Tragring in Einfach- oder Mehrfachausführung ausgebildet ist, wobei das Tragelement (4) über Rastmittel (6, 6a) an der Geräteaufnahmedose (2) befestigbar ist,
**dadurch gekennzeichnet,**
**daß** das Tragelement (4) als Formteil aus Kunststoff ausgebildet ist und daß die Rastmittel (6a) aus im wesentlichen formstabilen Rastansätzen (26) des Tragelementes (4) und entsprechend zugeordneten, im Bereich von elastisch verformbaren (Pfeil 29) Wandungen (30) der Geräteaufnahmedose (2) gebildeten Rastöffnungen (28) bestehen.

4. Anordnung nach Anspruch 3,
**dadurch gekennzeichnet,**
**daß** zusätzliche Rastmittel (6) aus mindestens zwei gegenüberliegenden, federelastischen Rastarmen (8) und entsprechend zugeordneten Rastöffnungen (10) vorgesehen sind, wobei jeder Rastarm (8) mit mindestens einem Rastnocken (12) in eine zugehörige Rastöffnung (10) eingreift.

5. Anordnung nach Anspruch 4,
**dadurch gekennzeichnet,**
**daß** die Rastarme (8) Bestandteil des Tragelementes (4) sind, während die Rastöffnungen (10) im an eine Einsatzöffnung (14) angrenzenden, oberen Randbereich von Wandungen (16) der Geräteaufnahmedose (2) gebildet sind.

6. Anordnung nach einem der Ansprüche 1 bis 5,
**dadurch gekennzeichnet,**
**daß** jeder Rastarm (8) einen etwa U-förmigen Verlauf aufweist und sich ausgehend von dem Tragelement (4) zunächst mit einem ersten Abschnitt (18) in Einsetzrichtung (20) nach unten erstreckt und über einen Bogen (22) in einen entgegengesetzt nach oben gerichteten, den mindestens einen Rastnocken (12) aufweisenden, einen Lösehebel bildenden zweiten Abschnitt (24) übergeht.

7. Anordnung nach einem der Ansprüche 1 bis 6,
**dadurch gekennzeichnet,**
**daß** das Tragelement (4) randliche Halterungsabschnitte (32) aufweist, die im mit der Geräteaufnahmedose (2) verbundenen und verrasteten Zustand den oberen Rand von Wandungen (16; 30) der Dose (2) übergreifen, und zwar insbesondere im den Rastmitteln (6) jeweils benachbarten Bereich der Wandungen (16; 30).

8. Anordnung nach einem der Ansprüche 1 bis 7,
**dadurch gekennzeichnet,**
**daß** das Tragelement (4) in seinem mit der Geräteaufnahmedose (2) in deren oberem Randbereich verbundenen und verrasteten Zustand bereichsweise im wesentlichen spielfrei in die Geräteaufnahmedose (2) eingreift sowie bereichsweise auf dem oberen Rand von Wandungen (16; 30) der Dose (2), insbesondere in deren Eckbereichen, aufliegt, wobei in den Auflagebereichen vorzugsweise Positionierstifte (34) angeordnet sind.

9. Anordnung nach einem der Ansprüche 1 bis 8,
**dadurch gekennzeichnet,**
**daß** das Tragelement (4) aus einem Thermoplast, wie Polyamid, ausgebildet ist, wobei die tragelementseitigen Rastmittel (6) insbesondere einstückig angeformt sind.

10. Anordnung nach einem der Ansprüche 1 bis 9,
**dadurch gekennzeichnet,**
**daß** das Tragelement (4) insbesondere unlösbar mit einem Installationsgerät verbunden ist, wozu vorzugsweise das Tragelement (4) mindestens zwei stiftartige, durch Öffnungen des Installationsgerätes geführte Verbindungsansätze (40) aufweist, deren Enden zur Erzeugung von Formschlußverbindungen nietkopfartig erweitert sind.

11. Anordnung nach einem der Ansprüche 1 bis 10,
**dadurch gekennzeichnet,**
**daß** das Tragelement (4) im Bereich seiner der Geräteaufnahmedose (2) abgekehrten Oberseite (46) Befestigungsmittel - insbesondere in Form von Löchern (48) zum Einschrauben von vorzugsweise selbstschneidenden Schrauben - für mindestens ein Geräteelement aufweist.

12. Anordnung nach einem der Ansprüche 1 bis 11,
**dadurch gekennzeichnet,**
**daß** das Tragelement (4) im Bereich seiner Oberseite (46) vorzugsweise einstückig angeformte Positionierelemente (50) für Geräteteile, insbesondere für eine Abdeckung, aufweist.

13. Anordnung nach einem oder mehreren der Ansprüche 1 bis 12,
**dadurch gekennzeichnet,**
**daß** zumindest bei einer Teilmenge der vorhandenen Rastverbindungen jeweils der im wesentlichen senkrecht zur Seitenwandung (30) in die Rastöffnung (28) eingreifende Rastansatz (26) einen die Seitenwandung (30) in Richtung der gegenüberliegenden Wandungsseite rastend durch- und hintergreifenden Haltefortsatz (52) aufweist.

14. Anordnung nach Anspruch 13,
**dadurch gekennzeichnet,**
**daß** der bzw. jeder den Haltefortsatz (52) aufweisende Rastansatz (26) in Dosen-Einsetzrichtung (20) und senkrecht zur Seitenwandung (30) gesehen im wesentlichen formstabil ausgebildet ist, wobei die zugehörige Rastöffnung (28) in einem Bereich der Seitenwandung (30) angeordnet ist, in dem letztere zum Verrasten mit dem Rastansatz (26) elastisch verformbar ist.

15. Anordnung nach Anspruch 13 oder 14,
**dadurch gekennzeichnet,**
**daß** sich der Haltfortsatz (52) ausgehend von dem Rastansatz (26) quer zur Dosen-Einsetzrichtung (20) zur Seite erstreckt, wobei der Rastansatz (26) in dieser quer zur Dosen-Einsetzrichtung (20) verlaufenden Richtung elastisch verformbar ist.

16. Anordnung nach einem der Ansprüche 13 bis 15,
**dadurch gekennzeichnet,**
**daß** auf der dem Haltefortsatz (52) abgekehrten Seite des Rastansatzes (26) zwischen diesem und dem Öffnungsrand der Rastöffnung (28) ein Spalt (54) gebildet ist, dessen Breite größer/gleich der entsprechenden Breite des Haltefortsatzes (52) ist.

17. Anordnung nach einem der Ansprüche 14 bis 16,
**dadurch gekennzeichnet,**
**daß** der Rastansatz (26) auf seiner in Dosen-Einsetzrichtung (20) aufweisenden Seite eine zum elastischen Bewegen der Dosen-Seitenwandung (30) ausgebildete Auflauffläche (56) aufweist.

18. Anordnung nach einem der Ansprüche 13 bis 17,
**dadurch gekenzeichnet,**
daß der bzw. jeder Haltefortsatz (52) eine im Zusammenwirken mit dem Öffnungsrand der Rastöffnung (28) eine elastische Seitenbewegung des Rastansatzes (26) bewirkende Auflauffäche (58) aufweist.

## Claims

1. Arrangement for the flush-mounting of electrical installation apparatuses, comprising an apparatus-accommodating box (2) and a carrying element (4) which is to be connected to at least one installation apparatus, can be fastened on the apparatus-accommodating box (2) and is designed in an essentially flat and frame-like manner as a so-called carrying ring for the purpose of installing one or more apparatuses, it being possible for the carrying element (4) to be fastened on the apparatus-accommodating box (2) via latching means (6, 6a), and the latching means (6) comprising at least two mutually opposite, resiliently elastic latching arms (8) and correspondingly assigned latching openings (10), each latching arm (8) engaging in an associated latching opening (10) by way of at least one latching protrusion (12),
**characterized in that** the carrying element (4) is designed as a moulding made of plastic, and **in that** the latching arms (8) are a constituent part of the carrying element (4), while the latching openings (10) are formed in the top border region of walls (16) of the apparatus-accommodating box (2), said top border region being adjacent to an insertion opening (14).

2. Arrangement according to Claim 1, **characterized in that** there are provided additional latching means (6a) which comprise essentially dimensionally stable latching extensions (26) of the carrying element (4) and correspondingly assigned latching openings (28) which are formed in the region of elastically deformable (arrow 29) walls (30) of the apparatus-accommodating box (2).

3. Arrangement for the flush-mounting of electrical installation apparatuses, comprising an apparatus-accommodating box (2) and a carrying element (4) which is to be connected to at least one installation apparatus, can be fastened on the apparatus-accommodating box (2) and is designed in an essentially flat and frame-like manner as a so-called carrying ring for the purpose of installing one or more apparatuses, it being possible for the carrying element (4) to be fastened on the apparatus-accommodating box (2) via latching means (6, 6a), **characterized in that** the carrying element (4) is designed as a moulding made of plastic, and **in that** the latching means (6a) comprise essentially dimensionally stable latching extensions (26) of the carrying element (4) and correspondingly assigned latching openings (28) which are formed in the region of elastically deformable (arrow 29) walls (30) of the apparatusaccommodating box (2),

4. Arrangement according to Claim 3, **characterized in that** there are provided additional latching means (6) made of at least two mutually opposite, resiliently elastic latching arms (8) and correspondingly assigned latching openings (10), each latching arm (8) engaging in an associated latching opening (10) by way of at least one latching protrusion (12).

5. Arrangement according to Claim 4, **characterized in that** the latching arms (8) are a constituent part of the carrying element (4), while the latching openings (10) are formed in the top border region of walls (16) of the apparatus-accommodating box (2), said top border region being adjacent to an insertion opening (14).

6. Arrangement according to one of Claims 1 to 5,
**characterized in that** each latching arm (8) has an approximately U-shaped profile and, starting from the carrying element (4), first of all extends downwards in the insertion direction (20) by way of a first section (18) and, via an arc (22), merges into a second section (24), which is oriented upwards in the opposite direction, has at least one latching protrusion (12) and forms a release lever.

7. Arrangement according to one of Claims 1 to 6,
**characterized in that** the carrying element (4) has peripheral mounting sections (32) which, when connected and latched to the apparatus-accommodating box (2), engage over the top border of walls (16; 30) of the box (2), to be precise in particular **in that** region of the walls (16; 30) which is adjacent to the latching means (6) in each case.

8. Arrangement according to one of Claims 1 to 7,
**characterized in that**, when connected and latched to the top border region of the apparatus-accommodating box (2), the carrying element (4), in part, engages in an essentially play-free manner in the apparatus-accommodating box (2) and, in part, bears on the top border of walls (16; 30) of the box (2), in particular in the corner regions thereof, positioning pins (34) preferably being arranged in the bearing regions.

9. Arrangement according to one of Claims 1 to 8,
**characterized in that** the carrying element (4) is formed from a thermoplastic, such as polyamide, the latching means (6) of the carrying element being, in particular, integrally formed thereon.

10. Arrangement according to one of Claims 1 to 9,
**characterized in that** the carrying element (4) is connected, in particular non-releasably, to an installation apparatus, for which purpose the carrying element (4) preferably has at least two pin-like connecting extensions (40) which are guided through openings of the installation apparatus and of which the ends are widened in the manner of a rivet head in order to produce form-fitting connections.

11. Arrangement according to one of Claims 1 to 10,
**characterized in that** in the region of its top side (46), which is directed away from the apparatus-accommodating box (2), the carrying element (4) has fastening means - in particular in the form of holes (48) into which preferably self-tapping screws can be screwed - for at least one apparatus element.

12. Arrangement according to one of Claims 1 to 11,
**characterized in that**, in the region of its top Side (46), the carrying element (4) has preferably integrally formed positioning elements (50) for apparatus parts, in particular for a covering.

13. Arrangement according to one or more of Claims 1 to 12, **characterized in that**, at least in the case of some of the latching connections present, in each case the latching extension (26), which engages in the latching opening (28) essentially perpendicularly to the side wall (30), has a retaining continuation (52) which engages with latching action through and behind the side wall (30) in the direction of the opposite wall side.

14. Arrangement according to Claim 13, **characterized in that** the or each latching extension (26), which has the retaining continuation (52), is of essentially dimensionally stable design, as seen in the box-insertion direction (20) and perpendicularly to the side wall (30), the associated latching opening (28) being arranged in a region of the side wall (30) in which said side wall can be elastically deformed for the purpose of latching to the latching extension (26).

15. Arrangement according to Claim 13 or 14,
**characterized in that**, starting from the latching extension (26), the retaining continuation (52) extends to the side in a direction transverse to the box-insertion direction (20), it being possible for the latching extension (26) to be elastically deformed in this direction running transversely to the box-insertion direction (20).

16. Arrangement according to one of Claims 13 to 15,
**characterized in that** a gap (54) is formed on that side of the latching extension (26) which is directed away from the retaining continuation (52), between said latching extension and the opening border of the latching opening (28), and the width of this gap is greater than/equal to the corresponding width of the retaining continuation (52).

17. Arrangement according to one of Claims 14 to 16,
**characterized in that**, on its side which is oriented in the box-insertion direction (20), the latching extension (26) has a run-on surface (56) designed in order for the box side wall (30) to be moved elastically.

18. Arrangement according to one of Claims 13 to 17,
**characterized in that** the or each retaining continuation (52) has a run-on surface (58) which, in interaction with the opening border of the latching opening (28), causes an elastic lateral movement of the latching extension (26).

## Revendications

1. Agencement de support de montage d'appareils électriques, constitué d'un boîtier (2) de réception d'appareil et d'un élément de support (4) à relier à au moins un appareil d'installation et apte à être fixé sur le boîtier (2) de réception d'appareil, configuré essentiellement plan et en forme de cadre, comme anneau dit de support, en exécution simple ou multiple, l'élément de support (4) pouvant être fixé sur le boîtier (2) de réception d'appareil par des moyens d'accrochage élastique (6, 6a) et les moyens d'accrochage élastique (6) étant constitués d'au moins deux bras élastiques d'accrochage élastique (8) opposés et d'ouvertures d'accrochage élastique (10) associées de manière correspondante, chaque bras d'accrochage élastique (8) s'engageant par au moins une came d'accrochage élastique (12) dans une ouverture d'accrochage élastique (10) associée,
**caractérisé en ce que** l'élément de support (4) est réalisé comme pièce façonnée en matière synthétique, et **en ce que** les bras d'accrochage élastique (8) font partie intégrante de l'élément de support (4), tandis que les ouvertures d'accrochage élastique (10) sont formées dans une partie de bordure supérieure, adjacente à une ouverture d'insertion (14), de parois (16) du boîtier (2) de réception d'appareil.

2. Agencement selon la revendication 1, **caractérisé en ce que** des moyens d'accrochage élastique (6a) supplémentaires sont prévus, qui sont constitués d'appendices d'accrochage élastique (26) de forme essentiellement stable de l'élément de support (4) et d'ouvertures d'accrochage élastique (28) associées de manière correspondante, formées dans la région de parois (30) élastiquement déformables (flèche 29) du boîtier (2) de réception d'appareil.

3. Agencement de support de montage d'appareils électriques, constitué d'un boîtier (2) de réception d'appareil et d'un élément de support (4) à relier à au moins un appareil d'installation et apte à être fixé sur le bottier (2) de réception d'appareil, configuré essentiellement plan et en forme de cadre, comme anneau dit de support, en exécution simple ou multiple, l'élément de support (4) pouvant être fixé sur le boîtier (2) de réception d'appareil par des moyens d'accrochage élastique (6,6a), **caractérisé en ce que** l'élément de support (4) est réalisé comme pièce façonnée en matière synthétique et **en ce que** les moyens d'accrochage élastique (6a) sont constitués d'appendices d'accrochage élastique (26) de forme essentiellement stable de l'élément de support (4) et d'ouvertures d'accrochage élastique (28) associées de manière correspondante, formées dans la région de parois (30) élastiquement déformables (flèche 29) du boîtier (2) de réception d'appareil.

4. Agencement selon la revendication 3, **caractérisé en ce que** sont prévus des moyens d'accrochage élastique (6) supplémentaires constitués d'au moins deux bras d'accrochage élastique (8) élastiques opposés et d'ouvertures d'accrochage élastique (10) associées de manière correspondante, chaque bras d'accrochage élastique (8) s'engageant par au moins une came d'accrochage élastique (12) dans une ouverture d'accrochage élastique (10) associée.

5. Agencement selon la revendication 4, **caractérisé en ce que** les bras d'accrochage élastique (8) sont des composants de l'élément de support (4), tandis que les ouvertures d'accrochage élastique (10) sont formées dans une région de bordure supérieure, adjacente à une ouverture d'insertion (14), de parois (16) du boîtier (2) de réception d'appareil.

6. Agencement selon l'une des revendications 1 à 5,
**caractérisé en ce que** chaque bras d'accrochage élastique (8) s'étend sensiblement en forme de U partant de l'élément de support (4) d'abord vers le bas par une première partie (18) dans la direction d'insertion (20), et se poursuivant par l'intermédiaire d'un arc (22) en une deuxième partie (24) orientée dans le sens opposé vers le haut, présentant la came d'accrochage élastique (12) au moins prévue et formant un levier de libération.

7. Agencement selon l'une des revendications 1 à 6,
**caractérisé en ce que** l'élément de support (4) présente sur ses bords des parties de maintien (32) gui, dans la position reliée au boîtier (2) de réception d'appareil et accrochée élastiquement, chevauchent le bord supérieur de parois (16 ; 30) du boîtier (2), et en particulier dans chaque région des parois (16 ; 30) voisine des moyens d'accrochage élastique (6).

8. Agencement selon l'une des revendications 1 à 7,
**caractérisé en ce que** dans sa position reliée au boîtier (2) de réception d'appareil et accrochée élastiquement, l'élément de support (4) s'engage essentiellement sans jeu par des parties de sa région de bordure supérieure dans le boîtier (2) de réception d'appareil et est posé par zones sur le bord supérieur des parois (16 ; 30) du boîtier (2), en particulier dans la région de leurs coins, des tiges de positionnement (34) étant disposées de préférence dans les zones de pose.

9. Agencement selon l'une des revendications 1 à 8,
**caractérisé en ce que** l'élément de support (4) est réalisé en un thermoplastique, par exemple un polyamide, les moyens d'accrochage élastique (6) situés latéralement sur l'élément de support étant en particulier formés d'un seul tenant avec lui.

10. Agencement selon l'une des revendications 1 à 9,
**caractérisé en ce que** l'élément de support (4) est relié en particulier de manière non libérable à l'appareil d'installation, et à cet effet, l'élément de support (4) présente de préférence au moins deux appendices de liaison (40) en forme de tige qui sont passés dans des ouvertures de l'appareil d'installation et dont les extrémités sont évasées en forme de tête de rivet pour la création de liaisons en correspondance géométrique.

11. Agencement selon l'une des revendications 1 à 10,
**caractérisé en ce que** dans la région de son côté supérieur (46) non tourné vers le boîtier (2) de réception d'appareil, l'élément de support (4) présente des moyens de fixation pour au moins un élément d'appareil, qui présentent en particulier la forme de trous (48) permettant de visser des vis, de préférence autotaraudeuses.

12. Agencement selon l'une des revendications 1 à 11,
**caractérisé en ce que** dans la région de son côté supérieur (46), l'élément de support (4) présente des éléments de positionnement (50) pour des parties d'appareil, en particulier pour un couvercle, qui sont de préférence formés d'un seul tenant avec lui.

13. Agencement selon l'une ou plusieurs des revendications 1 à 12, **caractérisé en ce qu'**au moins pour une partie des liaisons d'accrochage élastique présentes, chaque appendice d'accrochage élastique (26) qui s'engage dans l'ouverture d'accrochage élastique (28) essentiellement à la perpendiculaire de la paroi latérale (30) présente une saillie de maintien (52) qui s'accroche élastiquement en direction du côté opposé de la paroi par traversée et accrochage par l'arrière.

14. Agencement selon la revendication 13, caractérisé en ce gue le ou chaque appendice d'accrochage élastique (26) présentant la saillie de maintien (52) est réalisé en forme stable lorsqu'il est vu dans la direction d'insertion du boîtier (20) et perpendiculairement à la paroi latérale (30), l'ouverture d'accrochage élastique (28) associée étant disposée dans une région de la paroi latérale (30) dans laquelle la paroi latérale est élastiquement déformable pour permettre l'accrochage élastique de l'appendice d'accrochage élastique (26).

15. Agencement selon la revendication 13 ou 14,
**caractérisé en ce que** partant de l'appendice d'accrochage élastique (26), la saillie de maintien (52) s'étend latéralement vers le côté et transversalement à la direction (20) d'insertion du boîtier, l'appendice d'accrochage élastique (26) étant élastiquement déformable dans la direction qui s'étend transversalement par rapport à la direction (20) d'insertion du boîtier.

16. Agencement selon l'une des revendications 13 à 15,
**caractérisé en ce que** sur le côté de l'appendice d'accrochage élastique (26) non tourné vers la saillie de maintien (52), un interstice (54) dont la largeur est supérieure ou égale à la largeur correspondante de la saillie de maintien (52) est formé entre l'appendice d'accrochage élastique et le bord de l'ouverture d'accrochage élastique (28).

17. Agencement selon l'une des revendications 14 à 16,
**caractérisé en ce que** sur son côté orienté dans la direction (20) d'insertion du boîtier, l'appendice d'accrochage élastique (26) présente une surface de déplacement (56) configurée en vue d'un déplacement élastique de la paroi latérale (30) du boîtier.

18. Agencement selon l'une des revendications 13 à 17,
**caractérisé en ce que** la ou chaque saillie de maintien (52) présente une surface de déplacement (58) qui, en coopération avec le bord de l'ouverture d'accrochage élastique (28), a pour effet un déplacement latéral élastique de l'appendice d'accrochage élastique (26).
